# EUROPEAN PATENT APPLICATION

(11) **EP 4 641 960 A1**
(43) Date of publication of application: **29.10.2025**
(21) Application number: 23914040.3
(22) Date of filing: 05.01.2023
(51) Int. Cl.: H04L 1/18, H04W 52/48

(54) **DATA RETRANSMISSION METHOD AND COMMUNICATION APPARATUS**

(71) Applicant: Huawei Technologies Co., Ltd., Shenzhen, Guangdong 518129 (CN)
(72) Inventor: YANG, Wenjun, Shenzhen, Guangdong 518129 (CN)
(74) Representative: Pfenning, Meinig & Partner mbB
(86) International application number: PCT/CN2023/070777
(87) International publication number: WO 2024/145882

(57) **Abstract**

This application provides a data retransmission method and a communication apparatus. The method is performed by a radio frequency unit side of a network device. The method includes: receiving first feedback information, where the first feedback information is feedback for first downlink data of a terminal device; and when determining, based on the first feedback information, that transmission of the first downlink data fails, sending second downlink data, where the second downlink data is retransmitted data of the first downlink data. In this way, a radio frequency unit of the network device performs a processing process of data retransmission, so that overall latency of a data retransmission process can be reduced.

## Description

### TECHNICAL FIELD

This application relates to the field of communication technologies, and more specifically, to a data retransmission method and a communication apparatus.

### BACKGROUND

In the field of wireless communication, wireless communication using a wireless signal as a transmission medium is more susceptible to interference than wired communication. To ensure accurate data transmission, data retransmission between a network device and a terminal device is particularly important.

However, a current data retransmission mechanism causes high latency. For a low-latency service, the high latency caused by the current data retransmission mechanism greatly affects a low-latency requirement of the low-latency service. Therefore, a method that can reduce data retransmission latency is urgently needed.

### SUMMARY

This application provides a data retransmission method and a communication apparatus, to reduce overall latency in a data retransmission process.

According to a first aspect, a data retransmission method is provided. The method is performed by a module on a radio frequency unit side of a network device, for example, a radio frequency unit, or a software module, a hardware circuit, or a combination of the software module and the hardware circuit that can implement the method. The method includes: receiving first feedback information, where the first feedback information is feedback for first downlink data of a terminal device; determining, based on the first feedback information, that transmission of the first downlink data fails; and sending second downlink data, where the second downlink data is retransmitted data of the first downlink data.

Specifically, the radio frequency unit may be a radio unit (radio unit, RU), or may be a module having a radio frequency function, for example, a remote radio unit (remote radio unit, RRU) or an active antenna unit (active antenna unit, AAU). Therefore, the radio frequency unit is a superordinate concept of the RU or the RRU.

In comparison with a manner in which the radio frequency unit sends, to a distributed unit, the first feedback information for feeding back a transmission status of the first downlink data, and the distributed unit determines, based on the first feedback information from the radio frequency unit, whether data retransmission processing needs to be performed, in a manner in which the radio frequency unit determines a transmission status of the first downlink data based on the first feedback information from the terminal device, and when determining that transmission of the first downlink data fails, the radio frequency unit directly sends the retransmitted data of the first downlink data to the terminal device, overall latency in a data retransmission process can be reduced.

In a possible implementation, before receiving the first feedback information, the method further includes: receiving first information, where the first information includes an identifier of the terminal device and the second downlink data.

Specifically, the radio frequency unit can determine, by interacting with a distributed unit, terminal devices on which data retransmission processing needs to be performed, to improve efficiency of a data retransmission mechanism.

In a possible implementation, the method further includes: determining a first communication resource and a second communication resource, where the first communication resource is for transmission of the second downlink data, the second communication resource is for transmission of second feedback information, and the second feedback information is feedback for the second downlink data; and sending indication information, where the indication information indicates the first communication resource and the second communication resource.

In this way, based on the communication resources indicated by the radio frequency unit, the terminal device can resend the second downlink data and receive the second feedback information.

In a possible implementation, the method further includes: receiving the second feedback information; determining, based on the second feedback information, that transmission of the second data succeeds; and sending third feedback information, where the third feedback information indicates, to a distributed unit, that transmission of the first downlink data succeeds, and the distributed unit is included in the network device.

Specifically, the distributed unit may be a distributed unit (distributed unit, DU), or may be another unit or module that can perform a similar or same function. This is not limited in this application. Therefore, the distributed unit is a superordinate concept of the DU.

In this way, the distributed unit can determine, based on the feedback information of the radio frequency unit, whether transmission of the downlink data succeeds, to reduce power consumption of the distributed unit, and reduce workload of the distributed unit.

According to a second aspect, a data retransmission method is provided. The method is performed by a module on a radio frequency unit side of a network device, for example, a radio frequency unit, or a software module, a hardware circuit, or a combination of the software module and the hardware circuit that can implement the method. The method includes: receiving first feedback information, where the first feedback information is feedback for first downlink data of a terminal device; determining, based on the first feedback information, that transmission of the first data succeeds; and sending second feedback information, where the second feedback information indicates, to a distributed unit, that transmission of the first downlink data succeeds, and the distributed unit is included in the network device.

Specifically, the radio frequency unit may process the feedback information from the terminal device, and when determining that transmission of the downlink data succeeds, the radio frequency unit sends, to the distributed unit, new feedback information that indicates that transmission of the downlink data succeeds. The distributed unit determines, based on the feedback information of the radio frequency unit, whether transmission of the downlink data succeeds. In this way, overall latency of a data retransmission feedback mechanism between the terminal device, the radio frequency unit, and the distributed unit can be reduced, power consumption of the distributed unit can be reduced, and workload of the distributed unit can be reduced.

In a possible implementation, the method further includes: receiving first information, where the first information includes an identifier of the terminal device and second downlink data, and the second downlink data is retransmitted data of the first downlink data.

According to a third aspect, a data retransmission method is provided. The method is performed by a module on a radio frequency unit side of a network device, for example, a radio frequency unit, or a software module, a hardware circuit, or a combination of the software module and the hardware circuit that can implement the method. The method includes: receiving first uplink data; and when determining that transmission of the first uplink data fails, sending first feedback information, where the first feedback information is feedback for the first uplink data.

In comparison with a manner in which the radio frequency unit sends the first uplink data to a distributed unit, and the distributed unit determines whether transmission of the first uplink data fails, in a manner in which the radio frequency unit checks the first uplink data from a terminal device, and when determining that transmission of the first uplink data fails, the radio frequency unit may directly send the feedback information to the terminal device, the terminal device can determine, based on the feedback information from the radio frequency unit, whether retransmitted data of the first uplink data needs to be resent to the radio frequency unit, to reduce overall latency in a data retransmission process.

In a possible implementation, the method further includes: receiving second uplink data, where the second uplink data is retransmitted data of the first uplink data; and when determining that transmission of the second uplink data succeeds, sending the second uplink data to a distributed unit, where the distributed unit is included in the network device.

Specifically, when determining, based on the first feedback information from the radio frequency unit, that transmission of the first uplink data fails, a terminal device may then send the retransmitted data of the first uplink data to the radio frequency unit. Further, when determining that transmission of the second uplink data succeeds, the radio frequency unit then sends the second uplink data to the distributed unit. In this way, the distributed unit can obtain the correctly transmitted uplink data.

In a possible implementation, before receiving the second uplink data, the method further includes: determining a first communication resource, where the first communication resource is for transmission of the second uplink data; and sending indication information, where the indication information indicates the first communication resource.

In this way, a terminal device can resend the second uplink data based on the communication resource indicated by the radio frequency unit.

In a possible implementation, before receiving the first uplink data, the method further includes: receiving first information, where the first information includes an identifier of a terminal device, and the terminal device is a sending source of the first uplink data.

Specifically, the radio frequency unit can determine, by interacting with the distributed unit, terminal devices on which data retransmission processing needs to be performed, to improve efficiency of a data retransmission mechanism.

According to a fourth aspect, a data retransmission method is provided. The method is performed by a module on a radio frequency unit side of a network device, for example, a radio frequency unit, or a software module, a hardware circuit, or a combination of the software module and the hardware circuit that can implement the method. The method includes: receiving first uplink data; and when determining that transmission of the first uplink data succeeds, sending the first uplink data to a distributed unit, where the distributed unit is included in the network device.

In a possible implementation, the method further includes: receiving first information, where the first information includes an identifier of a terminal device, and the terminal device is a sending source of the first uplink data.

According to a fifth aspect, a communication apparatus is provided, and is configured to perform the method according to the first aspect. In a design, the apparatus may include a module/unit that is in one-to-one correspondence with the method/operation/step/action described in the first aspect. The module/unit may be implemented by a hardware circuit, software, or a combination of the hardware circuit and the software. In another design, the apparatus includes a radio frequency unit, configured to receive first feedback information, where the first feedback information is feedback for first downlink data of a terminal device. The radio frequency unit is further configured to determine, based on the first feedback information, that transmission of the first data fails. The radio frequency unit is further configured to send second downlink data, where the second downlink data is retransmitted data of the first downlink data.

In a possible implementation, the radio frequency unit is further configured to receive first information, where the first information includes an identifier of the terminal device and the second downlink data.

In a possible implementation, the radio frequency unit is further configured to determine a first communication resource and a second communication resource, where the first communication resource is for transmission of the second downlink data, the second communication resource is for transmission of second feedback information, and the second feedback information is feedback for the second downlink data. The radio frequency unit is further configured to send indication information, where the indication information indicates the first communication resource and the second communication resource.

In a possible implementation, the radio frequency unit is further configured to receive the second feedback information. The radio frequency unit is further configured to determine, based on the second feedback information, that transmission of the second data succeeds. The radio frequency unit is further configured to send third feedback information, where the third feedback information indicates, to a distributed unit, that transmission of the first downlink data succeeds, and the distributed unit is included in the communication apparatus.

According to a sixth aspect, a communication apparatus is provided, and is configured to perform the method according to the second aspect. In a design, the apparatus may include a module/unit that is in one-to-one correspondence with the method/operation/step/action described in the second aspect. The module/unit may be implemented by a hardware circuit, software, or a combination of the hardware circuit and the software. In another design, the apparatus includes a radio frequency unit, configured to: receive first feedback information, where the first feedback information is feedback for first downlink data of a terminal device; determine, based on the first feedback information, that transmission of the first data succeeds; and send second feedback information, where the second feedback information indicates, to a distributed unit, that transmission of the first downlink data succeeds, and the distributed unit is included in the communication apparatus.

In a possible implementation, the radio frequency unit is further configured to receive first information, where the first information includes an identifier of the terminal device and second downlink data.

According to a seventh aspect, a communication apparatus is provided, and is configured to perform the method according to the third aspect. In a design, the apparatus may include a module/unit that is in one-to-one correspondence with the method/operation/step/action described in the third aspect. The module/unit may be implemented by a hardware circuit, software, or a combination of the hardware circuit and the software. In another design, the apparatus includes a radio frequency unit, configured to receive first uplink data. When determining that transmission of the first uplink data fails, the radio frequency unit is further configured to send first feedback information, where the first feedback information is feedback for the first uplink data.

In a possible implementation, the radio frequency unit is further configured to receive second uplink data, where the second uplink data is retransmitted data of the first data. The radio frequency unit is further configured to: when determining that transmission of the second uplink data succeeds, send the second uplink data to a distributed unit, where the distributed unit is included in the communication apparatus.

In a possible implementation, the radio frequency unit is further configured to determine a first communication resource, where the first communication resource is for transmission of the second uplink data. The radio frequency unit is further configured to send indication information, where the indication information indicates the first communication resource.

In a possible implementation, the radio frequency unit is further configured to receive first information, where the first information includes an identifier of a terminal device, and the terminal device is a sending source of the first uplink data.

According to an eighth aspect, a communication apparatus is provided, and is configured to perform the method according to the fourth aspect. In a design, the apparatus may include a module/unit that is in one-to-one correspondence with the method/operation/step/action described in the fourth aspect. The module/unit may be implemented by a hardware circuit, software, or a combination of the hardware circuit and the software. In another design, the apparatus includes a radio frequency unit, configured to receive first uplink data. The radio frequency unit is further configured to: when determining that transmission of the first uplink data succeeds, send the first uplink data to a distributed unit, where the distributed unit is included in the communication apparatus.

In a possible implementation, the radio frequency unit is further configured to receive first information, where the first information includes an identifier of a terminal device, and the terminal device is a sending source of the first uplink data.

According to a ninth aspect, a communication apparatus is provided, and includes a processor. The processor is configured to enable, by executing a computer program or instructions or by using a logic circuit, the communication apparatus to perform the method according to any one of the first aspect and the possible implementations of the first aspect, or the communication apparatus to perform the method according to any one of the second aspect and the possible implementations of the second aspect, or the communication apparatus to perform the method according to any one of the third aspect and the possible implementations of the third aspect, or the communication apparatus to perform the method according to any one of the fourth aspect and the possible implementations of the fourth aspect.

In a possible implementation, the apparatus further includes a memory, and the memory is configured to store the computer program or the instructions.

Optionally, the processor and the memory are integrated together, or the processor and the memory are separately disposed.

In another possible implementation, the memory is located outside the communication apparatus.

In a possible implementation, the communication apparatus further includes a communication interface that is configured to input and/or output a signal.

For example, the communication interface may be a transceiver, a circuit, a bus, a module, or another type of communication interface.

According to a tenth aspect, a communication apparatus is provided, and includes a logic circuit and an input/output interface. The input/output interface is configured to output and/or input a signal. The logic circuit is configured to perform the method according to any one of the first aspect and the possible implementations of the first aspect; or the logic circuit is configured to perform the method according to any one of the second aspect and the possible implementations of the second aspect; or the logic circuit is configured to perform the method according to any one of the third aspect and the possible implementations of the third aspect; or the logic circuit is configured to perform the method according to any one of the fourth aspect and the possible implementations of the fourth aspect.

According to an eleventh aspect, a computer-readable storage medium is provided, and includes a computer program or instructions. When the computer program or the instructions are run on a computer, the computer is enabled to perform the method according to any one of the first aspect and the possible implementations of the first aspect, or the computer is enabled to perform the method according to any one of the second aspect and the possible implementations of the second aspect, or the computer is enabled to perform the method according to any one of the third aspect and the possible implementations of the third aspect, or the computer is enabled to perform the method according to any one of the fourth aspect and the possible implementations of the fourth aspect.

According to a twelfth aspect, a computer program product is provided, and includes instructions. When the instructions are run on a computer, the computer is enabled to perform the method according to any one of the first aspect and the possible implementations of the first aspect, or the computer is enabled to perform the method according to any one of the second aspect and the possible implementations of the second aspect, or the computer is enabled to perform the method according to any one of the third aspect and the possible implementations of the third aspect, or the computer is enabled to perform the method according to any one of the fourth aspect and the possible implementations of the fourth aspect.

According to a thirteenth aspect, a communication system is provided, and includes the apparatus according to any one of the possible implementations of the fifth aspect to the tenth aspect and a terminal device, or includes the apparatus according to any one of the possible implementations of the fifth aspect to the tenth aspect and a distributed unit, or includes the apparatus according to any one of the possible implementations of the fifth aspect to the tenth aspect, a distributed unit, and a terminal device.

For descriptions of beneficial effects of the fourth aspect to the thirteenth aspect, refer to descriptions of beneficial effects of the first aspect and the third aspect. Details are not described herein again.

### BRIEF DESCRIPTION OF DRAWINGS

FIG. 1 is a diagram of a communication system 100 to which an embodiment of this application is applicable;
FIG. 2 is a diagram of a data retransmission method 200.
FIG. 3 is a schematic interaction flowchart of a data retransmission method 300 according to an embodiment of this application;
FIG. 4 is a schematic interaction flowchart of a data retransmission method 400 according to an embodiment of this application;
FIG. 5 is a block diagram of a structure of a communication apparatus 500 according to an embodiment of this application;
FIG. 6 is a block diagram of a structure of a communication apparatus 600 according to an embodiment of this application;
FIG. 7 is a block diagram of a structure of a communication apparatus 700 according to an embodiment of this application; and
FIG. 8 is a block diagram of a structure of a communication apparatus 800 according to an embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5^{th} generation (5^{th} generation, 5G) system, a new radio (new radio, NR) system, a system such as a 6^{th} generation (6^{th} generation, 6G) system evolved after 5G, and a non-terrestrial network (non-terrestrial network, NTN) system such as an inter-satellite communication system or a satellite communication system. The satellite communication system includes a satellite base station and a terminal device. The satellite base station provides a communication service for the terminal device. The satellite base station may alternatively communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. For example, coordinated multipoint transmission may be performed between macro base stations, between micro base stations, or between a macro base station and a micro base station. The technical solutions in embodiments of this application are applicable to the FDD/TDD system. The technical solutions in embodiments of this application are not only applicable to a low-frequency scenario (sub 6G), but also applicable to a high-frequency scenario (above 6 GHz), terahertz, optical communication, and the like. The technical solutions in embodiments of this application are not only applicable to communication between a network device and a terminal, but also applicable to communication between network devices, communication between terminals, communication in an internet of vehicles, communication in an internet of things, communication in an industrial internet, and the like.

The technical solutions in embodiments of this application may alternatively be applied to a scenario in which a terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are alternatively applicable to a dual connectivity (dual connectivity, DC) scenario in which a terminal is connected to at least two base stations.

The technical solutions in embodiments of this application are alternatively applicable to a macro-micro scenario including different forms of base stations in a communication network. For example, the base station may be a satellite, an air balloon station, an uncrewed aerial vehicle station, or the like. The technical solutions in embodiments of this application are alternatively applicable to a scenario in which both a wide-coverage base station and a small-coverage base station exist.

The technical solutions in embodiments of this application may be applied to a scenario in which a service has a requirement for high reliability, for example, a port, industrial manufacturing, transportation, and a coal mine scenario.

It may be further understood that the technical solutions in embodiments of this application may be further applied to a 5.5G wireless communication system, a 6G wireless communication system, and a wireless communication system after 5.5G and 6G. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, a communication apparatus configured to implement a function of the terminal device may be the terminal device, or may be an apparatus that can support the terminal device in implementing the function, for example, a chip system. The apparatus may be mounted in the terminal device or used in cooperation with the terminal device. In embodiments of this application, the chip system may include a chip, or may include a chip and another discrete component.

In embodiments of this application, the network device is a device having a wireless transceiver function, and is configured to communicate with the terminal device. An access network device may be a node in a radio access network (radio access network, RAN), or may be referred to as a base station, or may be referred to as a RAN node. The access network device may be an evolved NodeB (evolved NodeB, eNB or eNodeB) in LTE, a base station in a 5G network, for example, a gNodeB (gNB), a base station in an evolved public land mobile network (public land mobile network, PLMN) after 5G, a broadband network gateway (broadband network gateway, BNG), an aggregation switch, a 3^{rd} generation partnership project (3^{rd} generation partnership project, 3GPP) access device, or the like. For example, the RAN may be configured as a RAN defined in a 3GPP protocol, an open radio access network (open radio access network, O-RAN), a cloud access network (cloud radio access network, C-RAN), or the like.

The network device in embodiments of this application may further include various forms of base stations, for example, a macro base station, a micro base station (also referred to as a small cell), a relay station, a transmission reception point (transmission reception point, TRP), a transmission point (transmission point, TP), a mobile switching center, a device that performs a base station function in device-to-device (device-to-device, D2D), vehicle-to-everything (vehicle-everything, V2X), and machine-to-machine (machine, M2M) communication, a network device in an NTN communication system, and the like. This is not specifically limited in embodiments of this application.

The network device in embodiments of this application may further include a network element or a module that implements a part of functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a remote radio head (remote radio head, RRH), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited. Optionally, the fronthaul interface protocol between the DU and the RU in the O-RAN system may be further considered as a special example of the eCPRI interface protocol.

In embodiments of this application, an apparatus configured to implement a function of the network device may be the network device, or may be an apparatus that can support the network device in implementing the function, for example, a chip system. The apparatus may be mounted in the network device or used in cooperation with the network device. In embodiments of this application, the chip system may include a chip, or may include a chip and another discrete component.

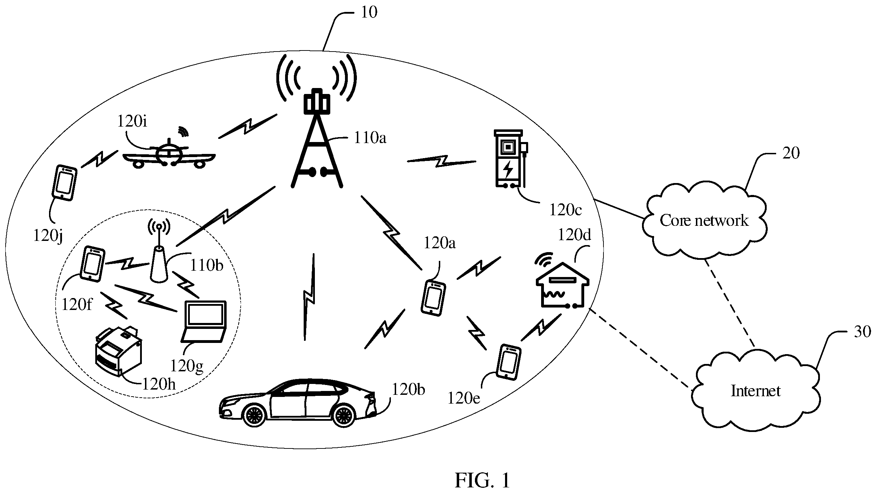

FIG. 1 is a diagram of a communication system 100 to which an embodiment of this application is applicable. As shown in FIG. 1, the communication system 100 includes a radio access network (radio access network, RAN) 10 and a core network (core network, CN) 20. The RAN 10 includes at least one RAN node (for example, 110a and 110b in FIG. 1, which are collectively referred to as 110) and at least one terminal (for example, 120a to 120j in FIG. 1, which are collectively referred to as 120). The RAN 10 may further include another RAN node, for example, a wireless relay device and/or a wireless backhaul device (not shown in FIG. 1). The terminal 120 is connected to the RAN node 110 in a wireless manner. The RAN node 110 is connected to the core network 20 in a wireless or wired manner. A core network device in the core network 20 and the RAN node 110 in the RAN 10 may be different physical devices, or may be a same physical device that integrates a logical function of the core network and a logical function of the radio access network.

The RAN 10 may be a 3GPP-related cellular system, for example, a 4G or 5G mobile communication system, or a future-oriented evolved system (for example, a 6G mobile communication system). Alternatively, the RAN 10 may be an O-RAN or a CRAN. Alternatively, the RAN 10 may be a communication system that integrates the foregoing two or more systems.

The RAN node 110 may also be sometimes referred to as an access network device, a RAN entity, an access node, or the like, and forms a part of a communication system, to help a terminal implement radio access. A plurality of RAN nodes 110 in the communication system 100 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, network elements 110a and 110b in FIG. 1 may be understood as communication apparatuses having a base station function, and network elements 120a to 120j may be understood as communication apparatuses having a terminal function.

In a possible scenario, the RAN node 110 may be a base station, an evolved base station, a TRP, a next generation base station, a next generation base station in a 6G mobile communication system, a base station in a future mobile communication system, or the like. The RAN node 110 may be a macro base station (for example, 110a), a micro base station or an indoor station (for example, 110b), a relay node or a donor node, or a radio controller in a CRAN scenario. Optionally, the RAN node 110 may alternatively be a server, a wearable device, a vehicle, a vehicle-mounted device, or the like. For example, an access network device in a V2X technology may be a roadside unit (roadside unit, RSU).

In another possible scenario, a plurality of RAN nodes 110 coordinate to assist the terminal in implementing radio access, and different RAN nodes 110 separately implement a part of functions of the base station. For example, the RAN node 110 may be a CU, a DU, a CU-CP, a CU-UP, or a radio unit (radio unit, RU). The CU and the DU may be separately disposed, or may be included in a same network element, for example, a BBU. The RU may be included in a radio frequency device or a radio frequency unit, for example, included in a remote radio unit RRU, an AAU, or a remote radio head (remote radio head, RRH).

In different systems, the CU (or the CU-CP and the CU-UP), the DU, or the RU may alternatively have a different name, but a person skilled in the art may understand a meaning of the name. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as an example for description in this application. Any one of the CU (or the CU-CP or the CU-UP), the DU, and the RU in this application may be implemented by using a software module, a hardware module, or a combination of the software module and the hardware module.

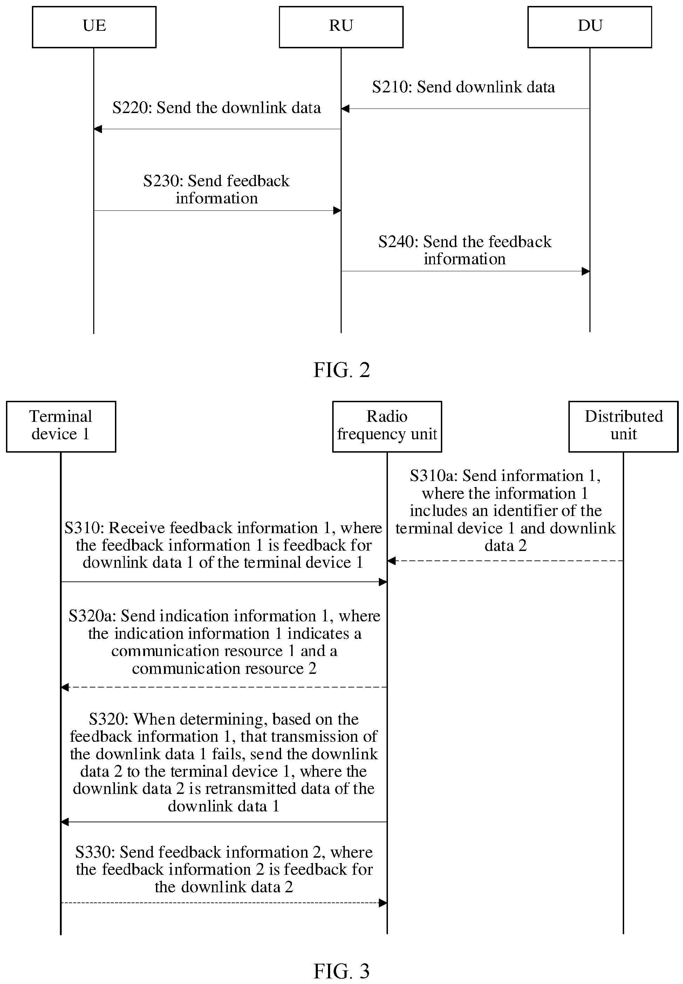

FIG. 2 is a schematic interaction flowchart of a data retransmission method 200. As shown in FIG. 2, the method 200 includes the following steps.

S210: A DU sends downlink data to an RU.

Correspondingly, the RU receives the downlink data from the DU.

S220: The RU sends the downlink data to UE.

Correspondingly, the UE receives the downlink data from the RU.

S230: The UE sends feedback information to the RU.

Correspondingly, the RU receives the feedback information from the UE.

Specifically, the UE checks the downlink data delivered by the RU, and when determining that transmission of the downlink data fails, the UE sends the feedback information to the RU, where the feedback information is for feeding back transmission of the downlink data.

S240: The RU sends the feedback information to the DU.

Correspondingly, the DU receives the feedback information from the RU, and when determining, based on the feedback information, that transmission of the downlink data fails, the DU resends retransmitted data of the downlink data to the UE through the RU.

It can be learned from the foregoing descriptions that the foregoing data retransmission mechanism is related to interaction between the UE, the RU, and the DU, causing high overall data retransmission latency. This is unacceptable for a low-latency service. Therefore, a data retransmission method and a communication apparatus that can reduce data retransmission latency need to be provided.

The following describes the data retransmission method and the communication apparatus in embodiments of this application with reference to the accompanying drawings.

FIG. 3 is a schematic interaction flowchart of a data retransmission method 300 according to an embodiment of this application. A method procedure in FIG. 3 may be performed by a distributed unit and a radio frequency unit of a network device, or may be performed by a module and/or a component (for example, a chip or an integrated circuit) that can be mounted in or connected to the distributed unit and the radio frequency unit of the network device and that have/has a corresponding function. This is not limited in embodiments of this application. The following uses the distributed unit and the radio frequency unit of the network device as an example for description. As shown in FIG. 3, the method 300 includes the following steps.

S310: The radio frequency unit receives feedback information 1 from a terminal device 1, where the feedback information 1 is feedback for downlink data 1 of the terminal device 1.

The radio frequency unit in S310 may be an RU, or may be a module having a radio frequency function, for example, an RRU or an AAU. Therefore, the radio frequency unit is a superordinate concept of the RU or the RRU.

Specifically, the distributed unit sends the downlink data 1 to the terminal device 1 through the radio frequency unit. The terminal device 1 checks the downlink data 1 from the radio frequency unit, and sends the feedback information 1 to the radio frequency unit, where the feedback information 1 is for feeding back a transmission status of the downlink data 1. The distributed unit may be a distributed unit (distributed unit, DU), or may be another unit or module that can perform a similar or same function. This is not limited in this application. Therefore, the distributed unit is a superordinate concept of the DU.

In a possible implementation, the feedback information 1 is for feeding back that transmission of the downlink data 1 succeeds. In a possible implementation, the feedback information 1 is for feeding back that transmission of the downlink data 1 fails.

S320: When determining, based on the feedback information 1, that transmission of the downlink data 1 fails, the radio frequency unit sends downlink data 2 to the terminal device 1, where the downlink data 2 is retransmitted data of the downlink data 1.

Specifically, when the radio frequency unit determines, based on the feedback information 1, that transmission of the downlink data 1 fails, the radio frequency unit then sends the retransmitted data of the downlink data 1, that is, the downlink data 2, to the terminal device 1. In this way, in this application, data retransmission can be completed through interaction between the terminal device and the radio frequency unit, so that overall latency in a data retransmission process can be reduced.

In comparison with a manner in which the radio frequency unit sends, to the distributed unit, the feedback information 1 for feeding back the transmission status of the downlink data 1, and the distributed unit determines, based on the feedback information 1 from the radio frequency unit, whether data retransmission processing needs to be performed, in a manner in which the radio frequency unit determines the transmission status of the downlink data 1 based on the feedback information 1 from the terminal device, and when determining that transmission of the downlink data 1 fails, the radio frequency unit sends the retransmitted data of the downlink data 1 to the terminal device, the overall latency in the data retransmission process can be reduced.

According to the foregoing technical solutions, in this application, the overall latency in the data retransmission process can be reduced.

In a possible implementation, when determining, based on the feedback information 1, that transmission of the downlink data 1 succeeds, the radio frequency unit may send the feedback information 1 to the distributed unit. Specifically, the radio frequency unit may process the feedback information 1 from the terminal device, and when determining that transmission of the downlink data 1 succeeds, the radio frequency unit sends, to the distributed unit, feedback information (which may be the feedback information 1, or may be other feedback information, and is not limited) that indicates that transmission of the downlink data succeeds. The distributed unit determines, based on the feedback information 1 of the radio frequency unit, whether transmission of the downlink data 1 succeeds. In this way, overall latency of a data retransmission feedback mechanism between the terminal device, the radio frequency unit, and the distributed unit can be reduced, power consumption of the distributed unit can be reduced, and workload of the distributed unit can be reduced.

Optionally, in a possible implementation, the method 300 may further include the following step.

S310a: The radio frequency unit receives information 1 from the distributed unit, where the information 1 includes an identifier of the terminal device 1 and the downlink data 2.

Specifically, the distributed unit sends an identifier of a receiving object (namely, the terminal device 1) of the downlink data 1 to the radio frequency unit. The radio frequency unit compares the identifier that is of the terminal device and that is included in the information 1 with the identifier of the terminal device 1 that sends the feedback information 1. If the identifiers are consistent, the radio frequency unit sends the downlink data 2 to the terminal device 1. If the identifiers are inconsistent, the radio frequency unit may not send the retransmitted data to the terminal device 1. In this way, the radio frequency unit can determine, by interacting with the distributed unit, terminal devices on which data retransmission processing needs to be performed, to improve efficiency of the data retransmission mechanism.

It may be understood that S310a is performed before S310.

Optionally, in a possible implementation, the method 300 may further include the following step.

S320a: The radio frequency unit sends indication information 1 to the terminal device 1, where the indication information 1 indicates a communication resource 1 and a communication resource 2.

Specifically, before the radio frequency unit sends the downlink data 2 to the terminal device 1, the radio frequency unit may determine the communication resource 1 and the communication resource 2. The communication resource 1 is for transmission of the downlink data 2, and the communication resource 2 is for transmission of feedback information 2. The feedback information 2 is for feeding back transmission of the downlink data 2. Correspondingly, the radio frequency unit sends the indication information 1 to the terminal device 1, so that the terminal device 1 determines the communication resources for transmission of the downlink data 1 and the feedback information 2. In this way, based on the communication resources indicated by the radio frequency unit, the terminal device 1 can resend the downlink data 2 and receive the feedback information 2.

It may be understood that S320a is performed before S320.

Optionally, in a possible implementation, the method 300 may further include the following step.

S330: The radio frequency unit receives the feedback information 2 from the terminal device 1, where the feedback information 2 is feedback for the downlink data 2.

Specifically, when the radio frequency unit determines, based on the feedback information 2, that transmission of the downlink data 2 succeeds, the radio frequency unit sends feedback information 3 (which may alternatively be the feedback information 2) to the distributed unit, where the feedback information 3 indicates, to the distributed unit, that transmission of the downlink data 1 succeeds. In this way, the distributed unit can determine, based on the feedback information 3 of the radio frequency unit, whether transmission of the downlink data 1 succeeds, to reduce the power consumption of the distributed unit, and reduce the workload of the distributed unit.

It may be understood that when the radio frequency unit determines, based on the feedback information 2, that transmission of the downlink data 2 fails, the radio frequency unit continues to send the retransmitted data of the downlink data 1 to the terminal device 1 until the terminal device 1 feeds back that transmission of the downlink data 1 succeeds.

It may be further understood that, when the radio frequency unit determines that the terminal device 1 feeds back, for a plurality of times, that transmission of the downlink data 1 fails, the radio frequency unit may send feedback information 4 to the distributed unit, where the feedback information 4 indicates that transmission of the downlink data 1 fails. Correspondingly, the distributed unit may perform new configuration for retransmission of the downlink data 1, for example, change communication resource configuration for transmission of the downlink data 1, or stop sending the downlink data 1 to the terminal device 1. This is not limited herein.

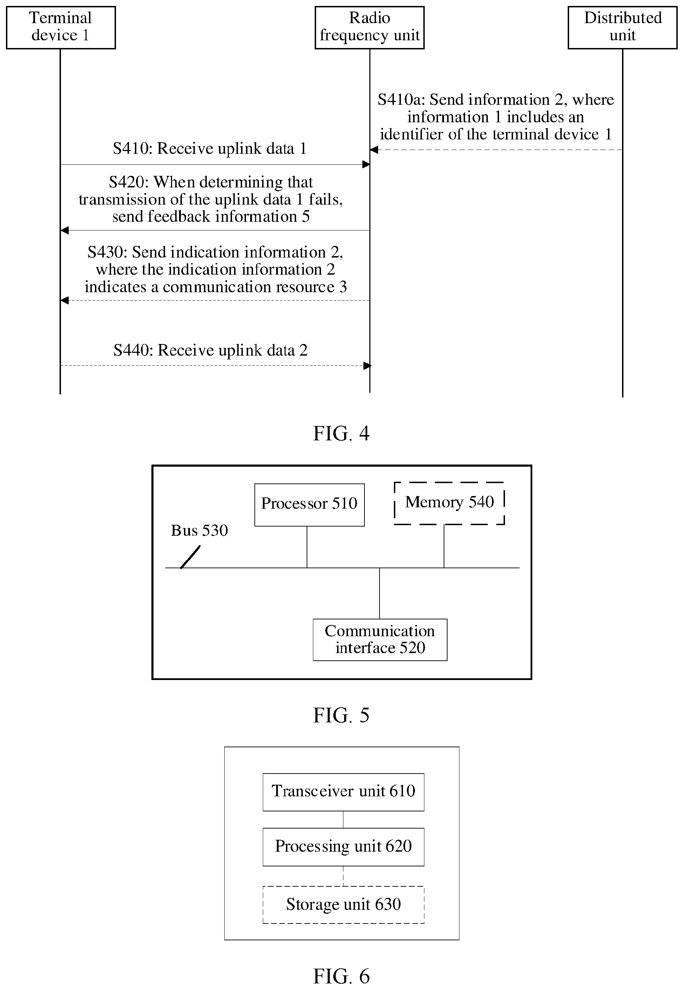

FIG. 4 is a schematic interaction flowchart of a data retransmission method 400 according to an embodiment of this application. A method procedure in FIG. 4 may be performed by a distributed unit and a radio frequency unit of a network device, or may be performed by a module and/or a component (for example, a chip or an integrated circuit) that can be mounted in or connected to the distributed unit and the radio frequency unit of the network device and that have/has a corresponding function. This is not limited in embodiments of this application. The following uses the distributed unit and the radio frequency unit of the network device as an example for description. As shown in FIG. 4, the method 400 includes the following steps.

S410: The radio frequency unit receives uplink data 1 from a terminal device 1.

The radio frequency unit in S410 may be an RU, or may be a module having a radio frequency function, for example, an RRU or an AAU. Therefore, the radio frequency unit is a superordinate concept of the RU or the RRU.

Specifically, the radio frequency unit checks the uplink data 1 from the terminal device 1, and sends feedback information 5 to the terminal device 1, where the feedback information 5 is for feeding back a transmission status of the uplink data 1.

In a possible implementation, the feedback information 5 is for feeding back that transmission of the uplink data 1 succeeds. In a possible implementation, the feedback information 5 is for feeding back that transmission of the uplink data 1 fails.

S420: When determining that transmission of the uplink data 1 fails, the radio frequency unit sends the feedback information 5 to the terminal device 1.

Correspondingly, the terminal device 1 receives the feedback information 5 from the radio frequency unit.

Specifically, when the radio frequency unit determines that transmission of the uplink data 1 fails, the radio frequency unit sends the feedback information 5 to the terminal device 1, where the feedback information 5 indicates, to the terminal device 1, that transmission of the uplink data 1 fails. Correspondingly, the terminal device 1 determines, based on the feedback information 5, that retransmitted data of the uplink data 1, that is, uplink data 2, needs to be sent to the radio frequency unit. In this way, in this application, data retransmission can be completed through interaction between the terminal device and the radio frequency unit, so that overall latency of data retransmission can be reduced.

In comparison with a manner in which the radio frequency unit sends the uplink data 1 to the distributed unit, and the distributed unit determines whether transmission of the uplink data 1 fails, in a manner in which the radio frequency unit checks the uplink data 1 from the terminal device, and when determining that transmission of the uplink data 1 fails, the radio frequency unit may send the feedback information 5 to the terminal device, the terminal device can determine, based on the feedback information 5 from the radio frequency unit, whether the retransmitted data of the uplink data 1 needs to be resent to the radio frequency unit, to reduce overall latency in a data retransmission process.

According to the foregoing technical solutions, in this application, the overall latency in the data retransmission process can be reduced.

Optionally, in a possible implementation, the method 400 may further include the following step.

S410a: The radio frequency unit receives information 2 from the distributed unit, where the information 2 includes an identifier of the terminal device 1.

Specifically, the distributed unit sends an identifier of a receiving object (namely, the terminal device 1) of the uplink data 1 to the radio frequency unit. The radio frequency unit compares the identifier that is of the terminal device and that is included in the information 2 with the identifier of the terminal device 1 that sends the uplink data 1. If the identifiers are consistent, the radio frequency unit sends the feedback information 5 to the terminal device 1. If the identifiers are inconsistent, the radio frequency unit does not send the feedback information 5 to the terminal device 1. In this way, the radio frequency unit can determine, by interacting with the distributed unit, terminal devices on which data retransmission processing needs to be performed, to improve efficiency of a data retransmission mechanism.

It may be understood that S410a is performed before S420.

Optionally, in a possible implementation, the method 400 may further include the following step.

S430: The radio frequency unit sends indication information 2 to the terminal device 1, where the indication information 2 indicates a communication resource 3.

Specifically, the radio frequency unit determines the communication resource 3, and a communication resource 4 is for transmission of the uplink data 2. Correspondingly, the radio frequency unit sends the indication information 2 to the terminal device 1, so that the terminal device 1 determines the communication resource for transmission of the uplink data 2. In this way, the terminal device 1 can resend the uplink data 2 based on the communication resource indicated by the radio frequency unit.

Optionally, the indication information 2 may further indicate a communication resource 4, where the communication resource 4 is for transmission of feedback information 6, and the feedback information 6 is for feeding back a transmission status of the uplink data 2.

Optionally, in a possible implementation, the method 400 may further include the following step.

S440: The radio frequency unit receives the uplink data 2 from the terminal device 1.

Specifically, when the terminal device 1 determines, based on the feedback information 5, that transmission of the uplink data 1 fails, the terminal device 1 sends the uplink data 2 to the radio frequency unit. Further, when determining that transmission of the uplink data 2 succeeds, the radio frequency unit may send the uplink data 1 to the distributed unit. In this way, the distributed unit can obtain the correctly transmitted uplink data.

It may be understood that, when the radio frequency unit determines that transmission of the uplink data 2 fails, the radio frequency unit then sends feedback information (for example, the feedback information 6) to the terminal device 1 until transmission of the uplink data 1 succeeds.

It may be further understood that, when the radio frequency unit determines that transmission of the uplink data 1 fails for a plurality of times, the radio frequency unit sends feedback information 7 to the distributed unit, where the feedback information 7 indicates that transmission of the uplink data 1 fails. Correspondingly, the distributed unit performs new configuration for retransmission of the uplink data 1, for example, changes communication resource configuration for transmission of the uplink data 1, or stops receiving the uplink data 1 from the terminal device 1. This is not limited herein.

It should be noted that in the technical solutions shown in FIG. 3 and FIG. 4, this application supports the following deployment on the radio frequency unit: protocol stack deployment and retransmission function deployment. The protocol stack deployment means that a feedback-related protocol stack part on the distributed unit is deployed on the radio frequency unit. For example, uplink includes resource element (resource element, RE) remapping, channel estimation, demodulation, descrambling, physical uplink shared channel (physical uplink shared channel, PUSCH) processing, physical uplink control channel (physical uplink control channel, PUCCH) processing, and the like, and downlink includes physical downlink shared channel (physical downlink shared channel, PUSCH) processing, physical downlink control channel (physical downlink control channel, PUSCH) processing, scrambling, modulation, RE mapping, and the like. Based on the protocol stack deployment, in this application, the radio frequency unit can have a capability of independently parsing uplink feedback information of a user and delivering retransmitted data. The retransmission function deployment means that a feedback-related function part on the distributed unit is deployed on the radio frequency unit. In this way, the radio frequency unit completes an uplink or downlink retransmission process based on the protocol stack deployment when the user feeds back data errors. The process includes identifying a specific user, allocating a retransmission resource to the user, organizing user retransmission information, and delivering the user retransmission information. In this way, in this application, the radio frequency unit can be enabled to complete data retransmission processing, so that the overall latency of data retransmission can be reduced.

Optionally, this application further supports configuration and data management deployment on the radio frequency unit. Specifically, this application supports cell-level related configuration and user-level related data management performed by the distributed unit on the radio frequency unit. For example, the cell-level configuration includes time domain and frequency domain information of uplink and downlink spectrums for performing data retransmission on the radio frequency unit, and the user-level data management includes a user identifier, original downlink data, time-frequency information of an air interface resource, and the like.

Specifically, in the technical solution shown in FIG. 3, the distributed unit sends the downlink data 1 to the terminal device 1, and then the distributed unit sends, to the radio frequency unit, user-level information (for example, including the identifier of the terminal device 1 and the downlink data 2) for performing retransmission processing of the downlink data 1 on the terminal device 1. The radio frequency unit may perform protocol stack processing on specified time-frequency domain information based on cell-level configuration information (for example, frequency domain information, time domain information, and air interface information), and obtain the feedback information 1 (for example, a PUCCH NACK). Further, a data retransmission function component of the radio frequency unit may allocate, based on the foregoing user-level information, a time-frequency resource for transmission of the downlink data 2 and a time-frequency resource for the feedback information 2 that is for feeding back the transmission status of the downlink data 2, and completely fill in the retransmitted data and the indication information according to a protocol. When determining that transmission of the downlink data 1 fails, the radio frequency unit sends the retransmitted data of the downlink data 1, that is, the downlink data 2, to the terminal device 1, and the terminal device 1 receives the downlink data 2 again. In addition, in the technical solution shown in FIG. 4, the distributed unit successfully sends a PDCCH indication of an uplink grant to the terminal device 1, and then the distributed unit sends, to the radio frequency unit, user-level information (for example, including the identifier of the terminal device 1) for performing data retransmission processing on the terminal device 1. The radio frequency unit may perform protocol stack processing on specified time-frequency domain information based on cell-level configuration information (for example, frequency domain information, time domain information, and air interface information), and obtain the feedback information 5, for example, determine that transmission of the uplink data 1 of the terminal device 1 fails (which, for example, may be determined based on a cyclic redundancy check (cyclic redundancy check, CRC) code of the uplink data 1). Correspondingly, a data retransmission function processing component of the radio frequency unit may allocate, based on the foregoing user-level information, a time-frequency resource for transmission of the uplink data 2 and a time-frequency resource for the feedback information 6 that is for feeding back the transmission status of the uplink data 2, and completely fill in the retransmitted data and the indication information according to a protocol. Finally, the radio frequency unit receives the retransmitted data of the uplink data 1, that is, the uplink data 2, from the terminal device 1.

It should be noted that, in embodiments of this application, after the protocol stack deployment and the retransmission function deployment are completed on the radio frequency unit, the radio frequency unit may quickly complete feedback information decoding and data retransmission resource allocation and indication based on information about a specific service in specific time-frequency domain without depending on the distributed unit. Specifically, after the protocol stack deployment and the retransmission function deployment on the radio frequency unit are completed, the distributed unit may further perform related configuration of data retransmission processing on the radio frequency unit, for example, including initial transmission information buffer management, feedback information decoding processing, retransmission resource allocation processing, and retransmission indication encoding processing. The radio frequency unit may independently complete processing of feedback and retransmission indication on the terminal device 1, and report a final feedback result (for example, feed back that the downlink data 1 is successfully sent, or feed back that the downlink data 1 fails to be sent) to the distributed unit.

The foregoing describes the method embodiments in embodiments of this application, and the following describes corresponding apparatus embodiments.

To implement functions in the methods provided in embodiments of this application, both the terminal and the network device may include a hardware structure and/or a software module, and implement the functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

FIG. 5 is a block diagram of a communication apparatus 500 according to an embodiment of this application. The communication apparatus 500 includes a processor 510 and a communication interface 520. The processor 510 and the communication interface 520 may be connected to each other through a bus 530. The communication apparatus 500 shown in FIG. 5 may be a radio frequency unit or a DU.

Optionally, the communication apparatus 500 further includes a memory 540.

The memory 540 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 540 is configured to store related instructions and data.

The processor 510 may be one or more central processing units (central processing units, CPUs). When the processor 510 is one CPU, the CPU may be a single-core CPU, or may be a multi-core CPU.

When the communication apparatus 500 is a radio frequency unit, for example, the processor 510 is configured to perform the following operations: receiving feedback information 1 from a terminal device 1; and when determining, based on the feedback information 1, that transmission of downlink data 1 fails, sending downlink data 2 to the terminal device 1, where the downlink data 2 is retransmitted data of the downlink data 1.

The foregoing content is merely used as an example for description. When the communication apparatus 500 is a radio frequency unit, the communication apparatus 500 is responsible for performing methods or steps related to the radio frequency unit in the foregoing method embodiments.

When the communication apparatus 500 is a distributed unit, for example, the processor 510 is configured to perform the following operation: sending information 1 to a radio frequency unit, where the information 1 includes an identifier of a terminal device 1 and downlink data 2.

The foregoing content is merely used as an example for description. When the communication apparatus 500 is a distributed unit, the communication apparatus 500 is responsible for performing methods or steps related to the DU in the foregoing method embodiments.

The foregoing descriptions are merely an example for description. For specific content, refer to the content shown in the foregoing method embodiments. In addition, for implementation of each operation in FIG. 5, refer to the corresponding descriptions in the method embodiments shown in FIG. 3 and FIG. 4.

FIG. 6 is a block diagram of a communication apparatus 600 according to an embodiment of this application. The communication apparatus 600 may be the radio frequency unit or the distributed unit in the foregoing embodiments, or may be a chip or a module in the radio frequency unit or the distributed unit, and is configured to implement the methods in the foregoing embodiments. The communication apparatus 600 includes a transceiver unit 610 and a processing unit 620. The following describes the transceiver unit 610 and the processing unit 620 by using examples.

The transceiver unit 610 may include a sending unit and a receiving unit that are respectively configured to implement a sending function or a receiving function in the foregoing method embodiments. The transceiver unit 610 may further include the processing unit, configured to implement a function other than sending or receiving.

When the communication apparatus 600 is a radio frequency unit, for example, the transceiver unit 610 is configured to receive feedback information 1 from a terminal device 1, and the processing unit 620 is configured to determine a transmission status of downlink data 1 based on the feedback information 1.

Optionally, the communication apparatus 600 further includes a storage unit 630. The storage unit 630 is configured to store a program or code for performing the foregoing methods.

The foregoing content is merely used as an example for description. When the communication apparatus 600 is a radio frequency unit, the communication apparatus 600 is responsible for performing methods or steps related to the radio frequency unit in the foregoing method embodiments.

When the communication apparatus 600 is a distributed unit, for example, the transceiver unit 610 is configured to send information 1 to a radio frequency unit, where the information 1 includes an identifier of a terminal device 1 and downlink data 2.

Optionally, the communication apparatus 600 further includes a storage unit 630. The storage unit 630 is configured to store a program or code for performing the foregoing methods.

The foregoing content is merely used as an example for description. When the communication apparatus 600 is a distributed unit, the communication apparatus 600 is responsible for performing methods or steps related to the distributed unit in the foregoing method embodiments.

In addition, for implementation of each operation in FIG. 6, refer to the corresponding descriptions of the methods shown in the foregoing embodiments. Details are not described herein again.

The apparatus embodiments shown in FIG. 5 and FIG. 6 are for implementing the content described in the foregoing method embodiments shown in FIG. 3 and FIG. 4. Therefore, for specific execution steps and methods of the apparatuses shown in FIG. 5 and FIG. 6, refer to the content described in the foregoing method embodiments.

It should be understood that the transceiver unit may include a sending unit and a receiving unit. The sending unit is configured to perform a sending action of the communication apparatus, and the receiving unit is configured to perform a receiving action of the communication apparatus. For ease of description, in embodiments of this application, the sending unit and the receiving unit are combined into one transceiver unit. Unified descriptions are provided herein, and details are not described below.

It may be understood that the transceiver unit 610 and the processing unit 620 may be internal compositions of the radio frequency unit or the distributed unit. This is not limited herein.

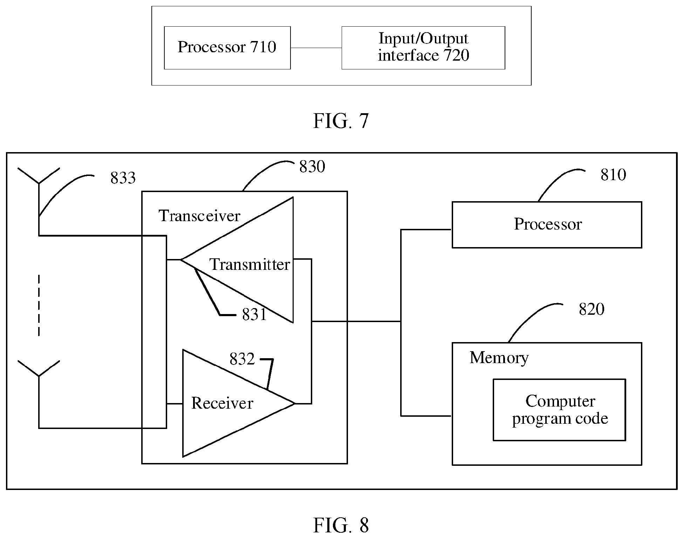

FIG. 7 is a diagram of a communication apparatus 700 according to an embodiment of this application. The communication apparatus 700 may be configured to implement a function of the radio frequency unit or the distributed unit in the foregoing methods. The communication apparatus 700 may be a chip in the radio frequency unit or the distributed unit.

The communication apparatus 700 includes an input/output interface 720 and a processor 710. The input/output interface 720 may be an input/output circuit. The processor 710 may be a signal processor, a chip, or another integrated circuit that can implement the methods in this application. The input/output interface 720 is configured to input or output a signal or data.

For example, when the communication apparatus 700 is a radio frequency unit, the input/output interface 720 is configured to receive feedback information 1 from a terminal device 1. The input/output interface 720 is further configured to: when determining, based on the feedback information 1, that transmission of downlink data 1 fails, send downlink data 2 to the terminal device 1, where the downlink data 2 is retransmitted data of the downlink data 1. The processor 710 is configured to determine a transmission status of the downlink data 1 based on the feedback information 1. The processor 710 is configured to perform a part or all of steps in any one of the methods provided in this application.

For example, when the communication apparatus 700 is a distributed unit, the input/output interface 720 is configured to send information 1 to a radio frequency unit, where the information 1 includes an identifier of a terminal device 1 and downlink data 2. The processor 710 is configured to perform a part or all of steps in any one of the methods provided in this application.

In a possible implementation, the processor 710 executes instructions stored in a memory, to implement a function implemented by a network device or a terminal device.

Optionally, the communication apparatus 700 further includes the memory.

Optionally, the processor and the memory are integrated together.

Optionally, the memory is outside the communication apparatus 700.

In a possible implementation, the processor 710 may be a logic circuit, and the processor 710 inputs/outputs a message or signaling through the input/output interface 720. The logic circuit may be a signal processor, a chip, or another integrated circuit that can implement the methods in embodiments of this application.

The foregoing descriptions of the apparatus in FIG. 7 are merely an example for description. The apparatus can be configured to perform the methods in the foregoing embodiments. For specific content, refer to the descriptions in the foregoing method embodiments. Details are not described herein again.

FIG. 8 is a block diagram of a communication apparatus 800 according to an embodiment of this application. The communication apparatus 800 may be a network device or a chip. The communication apparatus 800 may be configured to perform operations performed by the network device in the method embodiments shown in FIG. 3 and FIG. 4.

When the communication apparatus 800 is a network device, for example, a base station, FIG. 8 is a diagram of a simplified structure of the base station, and the base station includes a part 810, a part 820, and a part 830. The part 810 is mainly configured to perform baseband processing, control the base station, and the like. The part 810 is usually a control center of the base station, may be usually referred to as a processor, and is configured to control the base station to perform a processing operation on a network device side in the foregoing method embodiments. The part 820 is mainly configured to store computer program code and data. The part 830 is mainly configured to receive and send a radio frequency signal, and perform conversion between the radio frequency signal and a baseband signal. The part 830 may be usually referred to as a transceiver module, a transceiver machine, a transceiver circuit, a transceiver, or the like. The transceiver module in the part 830 may also be referred to as a transceiver machine, a transceiver, or the like, and includes an antenna 833 and a radio frequency circuit (not shown in FIG. 8). The radio frequency circuit is mainly configured to perform radio frequency processing. Optionally, in the part 830, a component configured to implement a receiving function may be considered as a receiver, and a component configured to implement a sending function may be considered as a transmitter. In other words, the part 830 includes a receiver 832 and a transmitter 831. The receiver may also be referred to as a receiving module, a receiver device, a receiving circuit, or the like, and the transmitter may be referred to as a transmitting module, a transmitter device, a transmitting circuit, or the like.

The part 810 and the part 820 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards share one or more processors at the same time.

For example, in an implementation, the transceiver module in the part 830 is configured to perform a receiving/sending-related process performed by the network device in embodiments shown in FIG. 3 and FIG. 4. The processor in the part 810 is configured to perform a processing-related process performed by the network device in embodiments shown in FIG. 3 and FIG. 4.

It should be understood that FIG. 8 is merely an example rather than a limitation. The network device including the processor, the memory, and the transceiver may not depend on the structures shown in FIG. 5 to FIG. 7.

When the communication apparatus 800 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

This application further provides a chip, including a processor. The processor is configured to invoke, from a memory, instructions stored in the memory and run the instructions, to enable a communication device on which the chip is mounted to perform the methods in the foregoing examples.

This application further provides another chip, including an input interface, an output interface, and a processor. The input interface, the output interface, and the processor are connected to each other through an internal connection path. The processor is configured to execute code in a memory, and when the code is executed, the processor is configured to perform the methods in the foregoing examples. Optionally, the chip further includes the memory, and the memory is configured to store a computer program or code.

This application further provides a processor, configured to be coupled to a memory, and configured to perform the method and the function that are related to the network device or the terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

In descriptions in embodiments of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the terms such as "example" or "for example" are used to represent giving an example, an illustration, or a description.

Any embodiment or design solution described by using "example" or "for example" in embodiments of this application should not be explained as being more preferred or having more advantages than another embodiment or design solution. Specifically, the term "example" or "for example" is used to present a related concept in a specific manner for ease of understanding.

In descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

In various embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in embodiments of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations in embodiments of this application, but are not intended to limit the protection scope of embodiments of this application. Any variation or replacement readily figured out by a person skilled in the art within the technical scope disclosed in embodiments of this application shall fall within the protection scope in embodiments of this application. Therefore, the protection scope of embodiments of this application should be subject to the protection scope of the claims.

## Claims

1. A data retransmission method, wherein the method is applied to a radio frequency unit side of a network device, and the method comprises:
receiving first feedback information, wherein the first feedback information is feedback for first downlink data of a terminal device; and
when determining, based on the first feedback information, that transmission of the first downlink data fails, sending second downlink data, wherein the second downlink data is retransmitted data of the first downlink data.

2. The method according to claim 1, wherein the method further comprises:
receiving first information, wherein the first information comprises an identifier of the terminal device and the second downlink data.

3. The method according to claim 1 or 2, wherein the method further comprises:
determining a first communication resource and a second communication resource, wherein
the first communication resource is for transmission of the second downlink data, the second communication resource is for transmission of second feedback information, and the second feedback information is feedback for the second downlink data; and
sending indication information, wherein the indication information indicates the first communication resource and the second communication resource.

4. The method according to claim 3, wherein the method further comprises:
receiving the second feedback information;
determining, based on the second feedback information, that transmission of the second data succeeds; and
sending third feedback information, wherein the third feedback information indicates, to a distributed unit, that transmission of the first downlink data succeeds, and the distributed unit is comprised in the network device.

5. A data retransmission method, wherein the method is applied to a radio frequency unit side of a network device, and the method comprises:
receiving first uplink data; and
when determining that transmission of the first uplink data fails, sending first feedback information, wherein the first feedback information is feedback for the first uplink data.

6. The method according to claim 5, wherein the method further comprises:
receiving second uplink data, wherein the second data is retransmitted data of the first data; and
when determining that transmission of the second uplink data succeeds, sending the second uplink data to a distributed unit, wherein the distributed unit is comprised in the network device.

7. The method according to claim 6, wherein the method further comprises:
determining a first communication resource, wherein the first communication resource is for transmission of the second uplink data; and
sending indication information, wherein the indication information indicates the first communication resource.

8. The method according to any one of claims 5 to 7, wherein the method further comprises:
receiving first information, wherein the first information comprises an identifier of a terminal device, and the terminal device is a sending source of the first uplink data.

9. A data retransmission method, wherein the method is applied to a radio frequency unit side of a network device, and the method comprises:
receiving first feedback information, wherein the first feedback information is feedback for first downlink data of a terminal device; and
when determining, based on the first feedback information, that transmission of the first data succeeds, sending second feedback information, wherein the second feedback information indicates, to a distributed unit, that transmission of the first downlink data succeeds, and the distributed unit is comprised in the network device.

10. The method according to claim 9, wherein the method further comprises:
receiving first information, wherein the first information comprises an identifier of the terminal device and second downlink data, and the second downlink data is retransmitted data of the first downlink data.

11. A data retransmission method, wherein the method is applied to a radio frequency unit side of a network device, and the method comprises:
receiving first uplink data; and
when determining that transmission of the first uplink data succeeds, sending the first uplink data to a distributed unit, wherein the distributed unit is comprised in the network device.

12. The method according to claim 11, wherein the method further comprises:
receiving first information, wherein the first information comprises an identifier of a terminal device, and the terminal device is a sending source of the first uplink data.

13. A communication apparatus, comprising:
a radio frequency unit, configured to receive first feedback information, wherein the first feedback information is feedback for first downlink data of a terminal device, wherein
the radio frequency unit is further configured to: when determining, based on the first feedback information, that transmission of the first data fails, send second downlink data, wherein the second downlink data is retransmitted data of the first downlink data.

14. The apparatus according to claim 13, wherein
the radio frequency unit is further configured to receive first information, wherein the first information comprises an identifier of the terminal device and the second downlink data.

15. The apparatus according to claim 13 or 14, wherein
the radio frequency unit is further configured to determine a first communication resource and a second communication resource, wherein
the first communication resource is for transmission of the second downlink data, the second communication resource is for transmission of second feedback information, and the second feedback information is feedback for the second downlink data; and
the radio frequency unit is further configured to send indication information, wherein the indication information indicates the first communication resource and the second communication resource.

16. The apparatus according to claim 15, wherein
the radio frequency unit is further configured to receive the second feedback information; and
the radio frequency unit is further configured to: when determining, based on the second feedback information, that transmission of the second data succeeds, send third feedback information, wherein the third feedback information indicates, to a distributed unit, that transmission of the first downlink data succeeds, and the distributed unit is comprised in the communication apparatus.

17. A communication apparatus, comprising:
a radio frequency unit, configured to receive first uplink data, wherein
the radio frequency unit is further configured to: when determining that transmission of the first uplink data fails, send first feedback information, wherein the first feedback information is feedback for the first uplink data.

18. The apparatus according to claim 17, wherein
the radio frequency unit is further configured to receive second uplink data, wherein the second data is retransmitted data of the first data; and
the radio frequency unit is further configured to: when determining that transmission of the second uplink data succeeds, send the second uplink data to a distributed unit, wherein the distributed unit is comprised in the communication apparatus.

19. The apparatus according to claim 18, wherein
the radio frequency unit is further configured to determine a first communication resource, wherein the first communication resource is for transmission of the second uplink data; and
the radio frequency unit is further configured to send indication information, wherein the indication information indicates the first communication resource.

20. The apparatus according to any one of claims 17 to 19, wherein
the radio frequency unit is further configured to receive first information, wherein the first information comprises an identifier of a terminal device, and the terminal device is a sending source of the first uplink data.

21. A communication apparatus, comprising:
a radio frequency unit, configured to receive first feedback information, wherein the first feedback information is feedback for first downlink data of a terminal device, wherein
the radio frequency unit is further configured to: when determining, based on the first feedback information, that transmission of the first data succeeds, send second feedback information, wherein the second feedback information indicates, to a distributed unit, that transmission of the first downlink data succeeds, and the distributed unit is comprised in the communication apparatus.

22. The apparatus according to claim 21, wherein
the radio frequency unit is further configured to receive first information, wherein the first information comprises an identifier of the terminal device and second downlink data, and the second downlink data is retransmitted data of the first downlink data.

23. A communication apparatus, comprising:
a radio frequency unit, configured to receive first uplink data, wherein
the radio frequency unit is further configured to: when determining that transmission of the first uplink data succeeds, send the first uplink data to a distributed unit, wherein the distributed unit is comprised in the communication apparatus.

24. The apparatus according to claim 23, wherein the radio frequency unit is further configured to receive first information, wherein the first information comprises an identifier of a terminal device, and the terminal device is a sending source of the first uplink data.

25. A communication apparatus, comprising a processor, wherein the processor is configured to enable, by executing a computer program or instructions or by using a logic circuit, the communication apparatus to perform the method according to any one of claims 1 to 12.

26. The communication apparatus according to claim 25, wherein the communication apparatus further comprises a memory, and the memory is configured to store the computer program or the instructions.

27. The communication apparatus according to claim 25 or 26, wherein the communication apparatus further comprises a communication interface, and the communication interface is configured to input and/or output a signal.

28. A communication apparatus, comprising a logic circuit and an input/output interface, wherein the input/output interface is configured to input and/or output a signal, and the logic circuit is configured to perform the method according to any one of claims 1 to 12.

29. A computer-readable storage medium, wherein the computer-readable storage medium stores a computer program or instructions, and when the computer program or the instructions are run on a computer, the method according to any one of claims 1 to 12 is performed.

30. A computer program product, comprising instructions, wherein when the instructions are run on a computer, the method according to any one of claims 1 to 12 is performed.

31. A communication system, comprising the communication apparatus according to any one of claims 13 to 28 and a terminal device.

32. A communication system, comprising the communication apparatus according to any one of claims 13 to 28 and a distributed unit.
